# EUROPEAN PATENT APPLICATION

(11) **EP 3 333 432 A1**
(43) Date of publication of application: **13.06.2018**
(21) Application number: 17198244.0
(22) Date of filing: 25.10.2017
(51) Int. Cl.: F04D 29/66, F04D 25/06, F04D 25/08, F04D 29/42

(54) **BLOWER**

(30) Priority: 06.12.2016 JP 2016236737
(71) Applicant: Shinano Kenshi Kabushiki Kaisha, Nagano 386-0498 (JP)
(72) Inventor: FUKUZAWA, Akihito, Ueda-shi,, Nagano 386-0498, (JP)
(74) Representative: Addiss, John William

(57) **Abstract**

To provide a blower (1) that reduces noise by making the transfer of rotational vibrations from a motor case (5) toward a blower case (3) difficult even when a brushless motor (4) is used as a driving source. An elastic resin body (17) extending annularly is integrally molded in a section radially inward of an engagement portion (concave portion 10d) engaged with the blower case (3) and radially outward of a motor board installation area in a flange portion (10) made of hard resin.

## Description

### Technical Field

The present invention relates to a blower used in, for example, HVAC (heating, ventilation, and air conditioning) devices such as air conditioning devices for vehicles.

### Background Art

An air conditioning device in which an impeller for generating an air flow is rotated and driven by a motor is provided with a centrifugal fan for taking air into a blower case (fan scroll) and a fan motor for rotating and driving the centrifugal fan. The fan motor is held in a motor case for rotatably holding a motor. The fan scroll and the motor case are integrally assembled to each other to prevent the leakage of air from the air passage by engaging the flange portion provided in the motor case with the fan scroll in a concavo-convex way.

Vibrations generated in the fan motor are transferred to the fan scroll (blower case) through the motor case, thereby generating noise easily. This is because the fan scroll is formed by a relatively thin component. To address this problem, a cylindrical coupling sleeve made of an elastic member is partially sandwiched between the motor case integrally assembled to the fan scroll and the base case that is the base of the motor case and connected to other devices (see PTL 1: JP-2002-500860). Alternatively, there is proposed a technique for integrally molding the motor case using a resin material and blocking the transfer of noise to the fan scroll by forming a flection in the flange portion for attenuation, thereby preventing the generation of noise (see PTL 2: JP-U-H05-91923).

### Summary of Invention

### Technical Problem

PTL 1 described above considers nothing about vibrations transferred from the motor case to the fan scroll, so vibrations generated in the fan motor are transferred to the fan scroll via the motor case, thereby generating noise. In addition, if the fan scroll is assembled to the base case, since the elastic member is present between the motor case and the base case only partially, the motor case may make contact with the base case without the elastic member due to component tolerances or assembly error and, in this case, vibrations generated in the motor case housing the motor are transferred to the base case and then the fan scroll, thereby generating noise. When the spacing between the motor case and the base case is increased to prevent this, the size of the fan motor is increased. This disables the vehicle motor to be installed in the limited space in the vehicle.

In addition, the motor in PTL 2 is a brush motor and the motor board for driving and controlling the fan motor is not provided in the motor case. Accordingly, the motor case itself has elasticity (PTL 2).

However, when the motor case itself has elasticity and the motor board is provided outside the motor case as described in PTL 2, since the motor board and the motor do not vibrate in synchronization with each other, the connection reliability is reduced because signal lines or electric power lines between them may be broken. Accordingly, such a structure cannot be adopted for a brushless motor.

In addition, even when an elastic member is sandwiched between the bearing housing and the flange portion provided in the motor case, rotational vibrations in a low frequency region (approximately 200 Hz to 400 Hz) are transferred from the flange portion toward the fan scroll (blower case).

### Solution to Problem

The invention aims to address these problems with an aim of providing a blower that makes the transfer of rotational vibrations from the motor case toward the blower case difficult and reduces noise even when a brushless motor is used as the driving source.

The invention has the following structure to achieve the above aim.

There is provided a blower in which a blower case housing an impeller concentrically assembled to a rotor shaft is integrally assembled to a motor case having a flange portion to which a motor board having a driving circuit for driving and controlling a motor is assembled, the impeller being disposed immediately above a rotor assembled to a rotor shaft, the flange portion rotatably supporting the rotor shaft, in which an elastic resin body extending annularly is integrally molded in a section radially inward of an engagement portion engaged with the blower case and radially outward of a motor board installation area in the flange portion made of hard resin.

In the fan motor, the blower case needs to be engaged with the flange portion tightly across the entire circumference to prevent the leakage of air. Accordingly, only by providing an elastic member partially in the flange portion, vibrations are transferred to the blower case via a part other than the elastic member. On the other hand, since an elastic resin body extending annularly is integrally molded in the section radially inward of an engagement portion engaged with the blower case and radially outward of a motor board installation area in the flange portion made of hard resin, air does not leak, rotational vibrations are not easily transferred from the motor case toward the blower case, and noise can be reduced.

Since the motor board electrically connected to the motor coil is integrally assembled to the motor case particularly in a brushless motor, the motor board and the motor vibrate in synchronization with each other, thereby reducing the possibility that signal lines and electric power lines therebetween are broken becomes low. Accordingly, the connection reliability of the motor can be improved.

Since vibrations of the bearing housing rotatably supporting the rotor shaft are not easily transferred to the flange portion when the bearing housing rotatably supporting the rotor is integrally assembled to the flange portion via an elastic member, vibrations transferred from the motor case toward the blower case can be attenuated more effectively in addition to the effects of the elastic resin body.

When two-color molding is performed by using thermoplastic resin as the flange portion and using elastomer resin as the annular elastic body, integral molding can be performed by molding the flange portion using hard resin (such as, for example, polypropylene resin) and then performing welding by insert molding (two-color molding) using elastomer resin having rubber-like elasticity.

When the motor board is supported by a motor cover, sandwiched by the flange portion, and housed in the motor case, even if the motor vibrates, since the motor board is integrally assembled by the flange portion to which the bearing housing has been fixed and the motor case, the motor board and the motor vibrate in synchronization with each other and the reliability of connection between the motor coils and the motor board can be maintained.

When the blower described above is used, even if a brushless motor is used as the driving source, rotational vibrations are not easily transferred from the motor case toward the blower case, and noise can be reduced.

### Brief Description of Drawings

Fig. 1 is a plan view illustrating a blower from which an impeller and a blower case have been removed.
Fig. 2 is a cross sectional view illustrating the blower in Fig. 1 taken along line A-A.
Fig. 3 is a bottom view illustrating the blower in Fig. 1.
Fig. 4 is a cross sectional view illustrating the blower in Fig. 1 taken along line B-B.
Fig. 5 is a perspective view illustrating the blower in Fig. 1.

### Description of Embodiments

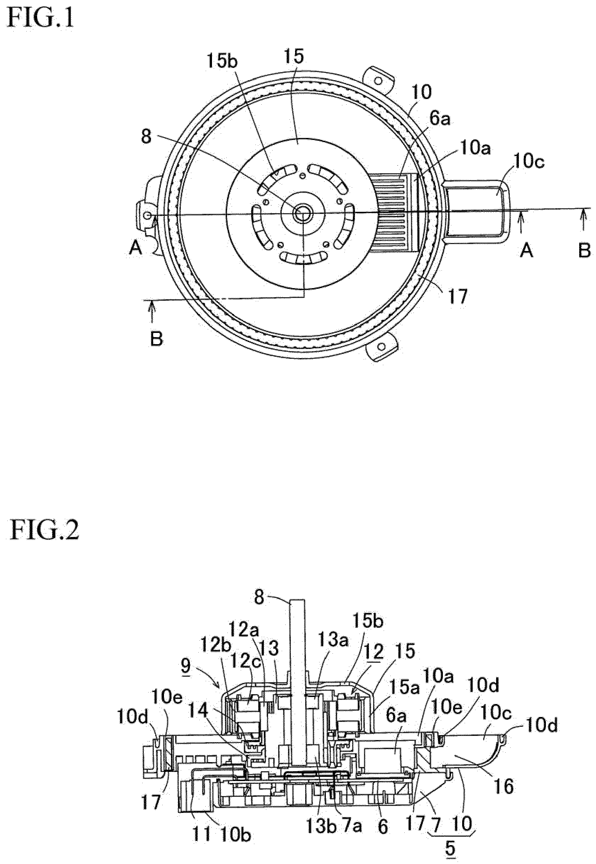

A blower according to the embodiment of the invention will be described below with reference to the drawings. First, the schematic structure of the blower will be described with reference to Figs. 1 to 5. A DC brushless motor is used as the motor and an outer rotor motor is used in this example. It should be noted that an inner rotor motor may be used instead.

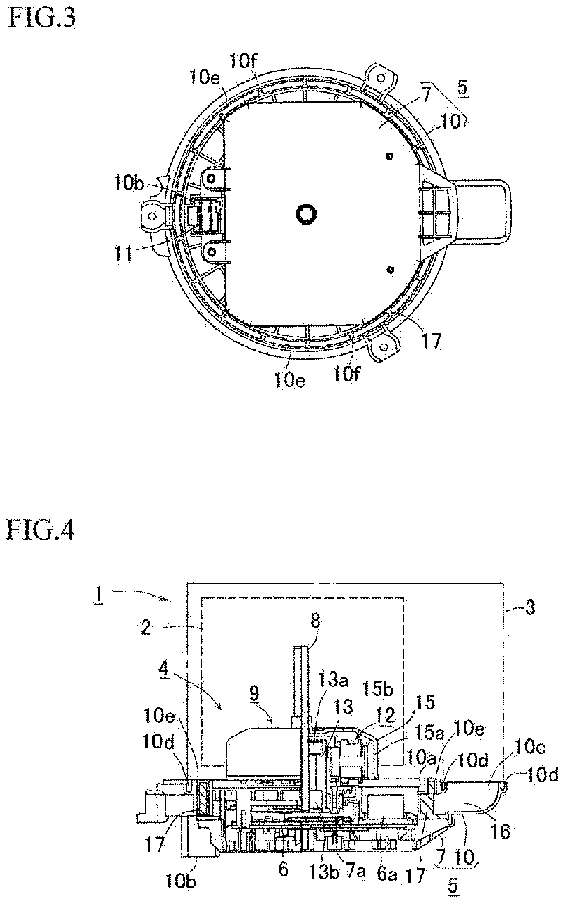

As illustrated in Fig. 4, a blower 1 is configured by integrally assembling a blower case 3 housing an impeller 2 to a motor case 5 supporting a motor 4. The motor case 5 is configured by integrally assembling a motor cover 7 to a flange portion 10 made of hard resin. The motor cover 7 supports a motor board 6 on which a driving circuit for driving and controlling a motor is provided. The motor board 6 supported by a boss provided on the motor cover 7 is integrally assembled into the motor case 5 by superimposing the flange portion 10 on the motor board 6.

The impeller 2 is concentrically assembled to the rotor shaft 8 so as to be disposed immediately above the motor 4 having a rotor 9 assembled to a rotor shaft 8. When the motor 4 is started, the blower 1 sucks outside air into the blower case 3 from the shaft direction and blows the compressed air from the outer peripheral direction of the impeller 2.

In Fig. 2, the motor board 6 is provided with a radiator (heat exchanger) 6a for radiating the heat generated by electronic components (such as, for example, FETs) or circuit components mounted on the board. The radiator 6a is formed so as to be exposed through an opening 10a provided in the flange portion 10. In addition, a power feeding terminal 11 is connected to the motor board 6. The flange portion 10 is provided with a connector 10b in which a part of the power feeding terminal 11 is exposed in a connectable manner. A part of the motor cover 7 is also provided with a terminal 7a for connecting to a motor driving circuit formed on the motor board 6.

Next, the structure of the motor 4 will be described with reference to Figs. 2, 4, and 5. First, the structure of a stator 12 will be described. A cylindrical bearing housing 13 of metal (such as, for example, an aluminum material or an aluminum alloy material) is integrally assembled via screwing to the flange portion 10 made of a hard resin material (for example, thermoplastic resin such as polypropylene resin). In addition, although the radial inside part and the radial outside part of the flange portion 10 are originally configured as separated parts, these parts are integrally coupled to each other via coupling portions 10e and coupling ribs 10f that constitute an elastic resin body 17, which will be described later.

In Figs. 2 and 4, the bearing housing 13 is inserted into the through hole of the flange portion 10 and a rubber cushion 14 (elastic member) is superimposed thereon and fixed by screwing. A pair of bearing portions (ball bearing) 13a and 13b is provided in the cylindrical hole of the bearing housing 13. The pair of the bearing portions 13a and 13b rotatably supports one end side of the rotor shaft 8. In addition, a stator core 12a is assembled to the outer peripheral surface of the bearing housing 13. In the stator core 12a, a plurality of pole teeth 12b projects radially outward from an annular core back part. A motor coil 12c is wound around each of the pole teeth 12b. In addition, a coil lead (not illustrated) drawn from the motor coil 12c is connected to the motor board 6.

Next, the structure of the rotor 9 will be described with reference to Figs. 2 and 4. A rotor yoke 15 formed in a cup is integrally assembled to the rotor shaft 8 by press-fitting, shrinkage fitting, adhesion, and the like. One end of the rotor shaft 8 passes through the motor board 6 and is retained and supported by the motor cover 7. The rotor yoke 15 is assembled in the internal diameter side housing space of the impeller 2 integrally assembled to the rotor shaft 8 so as to be aligned with the shaft direction. This can suppress the assembly height in the shaft direction of the impeller 2 and the rotor yoke 15 assembled concentrically to the rotor shaft 8 and reduce the size of the blower 1.

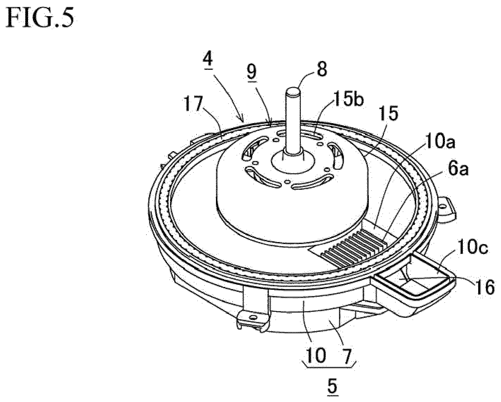

An annular rotor magnetic pole 15a is provided on the inner peripheral surface of the rotor yoke 15. The rotor yoke 15 is assembled to the rotor shaft 8 so that the rotor magnetic pole 15a faces the end surfaces (magnetic flux application surface) of the pole teeth 12b of the stator core 12a. As illustrated in Fig. 5, a plurality of through holes 15b is provided in the top surface of the rotor yoke 15. The through holes 15b form an air blowing channel 16 (cooling channel) through which air circulates from the motor coils 12c to the impeller 2.

As illustrated in Figs. 2 and 4, an air blowing port 10c opened toward the blower case 3 is provided on the outer peripheral side of the flange portion 10. A convex portion (not illustrated) of the blower case 3 is engaged integrally with a concave portion 10d formed on the outer peripheral side of the flange portion 10 in a concavo-convex way. This can prevent air from leaking. When the motor cover 7 is integrally assembled to the flange portion 10, a housing space is formed therebetween. This housing space is the air blowing channel 16 communicating the air blowing port 10c with the motor 4.

When the impeller 2 rotates, a part of blown air is taken through the air blowing port 10c, passes through the air blowing channel 16 and then the radiator 6a, is directly blown to the motor coils 12c wound around the pole teeth 12b of the stator core 12a, passes through the through holes 15b of the rotor yoke 15, and circulates toward the impeller 2 for radiation. Since the pressure of the space close to the top surface of the rotor yoke 15 becomes negative when the impeller 2 rotates, a part of blown air circulates through the motor 4 via the through holes 15b as long as the impeller 2 rotates, thereby exhausting heat efficiently.

In addition, as illustrated in Figs. 1 and 3, the elastic resin body 17 extending annularly is integrally molded (insert-molded or two-color molded) in the section radially inward of an engagement portion (concave portion 10d) engaged with the blower case 3 and radially outward of the motor board installation area in the flange portion 10 made of hard resin.

Since the coil leads of the motor coils 12c wound around the pole teeth 12b of the stator core 12a are connected to the motor board 6, the flange portion 10 and the motor cover 7 to which the motor board 6 is fixed preferably do not easily elastically deform and do not individually move. On the other hand, in order to make it difficult to transfer rotational vibrations caused by the rotation of the motor 4 from the flange portion 10 toward the blower case 3, the structure for absorbing or attenuating the rotational vibrations is necessary.

Accordingly, the elastic resin body 17 extending annularly is provided in the section radially inward of the engagement portion engaged with the blower case 3 and radially outward of the motor board installation area in the flange portion 10. The elastic resin body 17 is made of elastic elastomer resin and is molded integrally so as to pad a plurality of through holes provided in the flange portion 10 as described later.

As illustrated in Figs. 2 and 4, the coupling portions 10e are disposed annularly on the outer peripheral side of the flange portion 10. The coupling portions 10e are formed by being partially separated at a plurality of positions by the coupling ribs 10f formed radially from the center of the rotor. The coupling portions 10e are formed by making connection between the inner diameter part and the outer diameter part of the flange portion 10 using elastomer resin in parts in the thickness direction of the flange portion 10. In the coupling ribs 10f, connection between the inner diameter part and the outer diameter part of the flange portion 10 is made in the entire thickness direction of the flange portion 10. This integrally forms the elastic resin body 17 so that the exposed surface extends annularly in the part close to the blower case 3.

Specifically, the inner diameter part and the outer diameter part of the flange portion 10 are molded using hard resin (such as, for example, polypropylene resin) and then insert molding (two-color molding) is performed using elastomer resin having rubber-like elasticity to integrally mold the coupling portions 10e and the coupling ribs 10f between the inner diameter part and the outer diameter part. Elastomer resin is formed so as to be annularly connected on both surfaces of the flange portion 10. In addition, integral molding with good clinging may be performed in the coupling portions 10e formed like labyrinths. Accordingly, the elastic resin body 17 extending annularly has no discontinuous part in the circumferential direction and integrally molded so as to extend in the circumferential direction. In addition, since the coupling portions 10e are connected only in parts in the thickness direction of the flange portion 10, the inner diameter part and the outer diameter part of the flange portion 10 are displaced moderately and vibration energy is consumed. This can absorb or attenuate rotational vibrations in a low frequency area (approximately 200 Hz to 400 Hz) transferred from the flange portion 10 toward the blower case 3.

The motor board 6 is supported by the motor cover 7, sandwiched by the flange portion 10, and housed in the motor case 5. Accordingly, since the motor board 6 is integrally assembled by the flange portion 10 to which the bearing housing 13 has been fixed and the motor case 5 even when the motor 4 vibrates, the reliability of connection between the motor coils 12c and the motor board 6 can be maintained.

Although an outer rotor motor is used in the above example, an inner rotor motor may also be used.

## Claims

1. A blower (1) in which a blower case (3) housing an impeller (2) concentrically assembled to a rotor shaft (8) is integrally assembled to a motor case (5) having a flange portion (10) to which a motor board (6) having a driving circuit for driving and controlling a motor (4) is assembled, the impeller (2) being disposed immediately above a rotor (9) assembled to a rotor shaft (8), the flange portion (10) rotatably supporting the rotor shaft (8),
wherein an elastic resin body (17) extending annularly is integrally molded in a section radially inward of an engagement portion engaged with the blower case (3) and radially outward of a motor board installation area in the flange portion (10) made of hard resin.

2. The blower according to claim 1,
wherein a bearing housing (13) rotatably supporting the rotor (9) is integrally assembled to the flange portion (10) via an elastic member (14).

3. The blower according to claim 1 or 2,
wherein the flange portion (10) is made of thermoplastic resin and the elastic resin body (17) is made of elastomer resin and two-color molded.

4. The blower according to any one of claims 1 to 3,
wherein the motor board (6) is supported by a motor cover (7), sandwiched by the flange portion (10), and integrally assembled into the motor case (5).
